# EUROPEAN PATENT SPECIFICATION

(11) **EP 0 315 807 B1**
(45) Date of publication and mention of the grant of the patent: **24.02.1993**
(21) Application number: 88117403.1
(22) Date of filing: 19.10.1988
(51) Int. Cl.: B65G 47/82

(54) **Method and apparatus for stacking articles and feeding the stacks to a discharge site**
Verfahren und Vorrichtung für das Stapeln von Artikeln und das Zuführen der Stapel an einen Abfuhrbereich
Procédé et dispositif pour l'empilage d'articles et l'alimentation des piles à un emplacement de décharge

(30) Priority: 09.11.1987 US 118534
(43) Date of publication of application: 17.05.1989
(73) Proprietor: DORNER MFG. CORP. WISCONSIN CORPORATION, Hartland Wisconsin 53029 (US)
(72) Inventor: Dorner, Wolfgang C., Oconomowoc Wisconsin 53066 (US); Hosch, Michael A., Hartland Wisconsin 53029 (US)
(74) Representative: Sajda, Wolf E., Dipl.-Phys.

(56) References cited:
- EP-A- 0 132 417
- DE-C- 1 269 937
- DE-U- 8 528 809
- GB-A- 2 003 439

## Description

The invention relates to a stacking apparatus, comprising first conveyor means to convey a plurality of articles edgewise in end-to-end relation; transfer means for successively moving each article laterally from the first conveyor means to form a stack of side-by-side articles; a carriage movable between a stack receiving position and a stack discharge position, the carriage having a first open end and a second end; and first drive means for moving the stack through the first open end into the carriage.

The invention also relates to a method for stacking articles and feeding the stack to a discharge conveyor including the steps of conveying a plurality of articles in end-to-end relation on a first conveyor and successively pushing each article laterally from the conveyor into bearing engagement with a movable backstop to form a stack of side-by-side articles.

Such an apparatus and a method are known from EP-A-0 132 417, wherein a machine for orienting, accumulating and positioning packages is disclosed which are received from two sources for loading into containers. In the machine, an oscillating member is provided which oscillates between the two sources during which time it both receives packages from one source while participating in loading packages into a container from the other source. An orienting mechanism is associated with the oscillating member and with each source, wherein the orienting mechanism rotates packages received from its associated source so that they rest on a common one of their sides. An accumulating mechanism of the machine collects the packages rotated by the orienting mechanism into a group of a predetermined number. The grouped packages are positioned onto the oscillating member by means of a positioning mechanism. Finally, a loading mechanism advances the positioned and grouped packages from the oscillating member into the container.

Conveying systems are often employed to convey small articles through a series of working stations. In certain conveyor systems, it is desired to stack a group of articles in side-by-side relation and transfer the stack to packaging or other working equipment. Frequently, a series of stacking units are utilized and the stacking units should be capable of automatically stacking the articles and feeding the stacks onto a discharge conveyor without interference between stacks.

The object underlying the present invention is to provide an apparatus and a method for stacking articles and feeding the stacks to a discharge site which are capable of automatically and reliably forming stacks of articles in side-to-side relation using articles which are fed in upright end-to-end relation.

The apparatus according to the invention is characterized in that the apparatus comprises a movable backstop against which the stack is formed; the carriage is movable between a stack receiving position offset from a second conveyor means to a stack discharge position located above the second conveyor means, and further comprises gate means for enclosing the second end, facing downstream in the direction of movement of the second conveyor means, and movable between a closed position and an open position, second drive means for moving the carriage from the receiving position to the discharge position, and means for moving the gate means from the closed position to the open position when the carriage is in the discharge position to release the stack for movement on the second conveyor means.

Such an apparatus can be used for a plurality of articles, such as small video cassette containers, jewelry boxes, or the like, which are conveyed on an in-feed conveyor in an upright end-to-end relation.

According to a further development of the apparatus according to the invention, the transfer means for moving each article to form a stack comprises pusher means disposed to move laterally across the first conveyor means, a generally flat platform disposed at substantially the same level as the first conveyor means to receive the articles as they are pushed from the first conveyor means, and backstop means mounted for movement in a direction laterally of the first conveyor means for supporting the stack on the platform.

In a specific embodiment of the apparatus according to the invention, the pusher means comprises a generally flat vertical pusher plate, and guide means disposed above the first conveyor means and offset from the path of travel of the pusher means, the guide means having a guide surface disposed at an acute angle to the side edge of the first conveyor means, the guide surface being constructed and arranged to pivot each article in a horizontal plane as the article approaches stop means to prevent the trailing edge of each article from catching on the leading edge of a succeeding article as the preceding is pushed laterally from the conveyor means.

According to a further development of the apparatus according to the invention, the backstop means comprises a stop member, a fluid cylinder including a reciprocating member, the stop member being connected to the reciprocating member, the fluid cylinder being constructed and arranged so that the reciprocating member is freely movable in a direction away from the first conveyor means, and the reciprocating member is power operated in a direction towards the first conveyor means.

In a specific embodiment of the apparatus according to the invention, the fluid cylinder comprises a rodless cylinder and the reciprocating member comprises carriage means mounted for movement on the rodless cylinder.

According to a further development of the apparatus according to the invention, guide means for guiding the stack in movement to the carriage are provided.

In a further development of the apparatus according to the invention, means are provided for pivotally connecting the gate means to the carriage for movement between the closed and open positions.

According to a further development of the apparatus according to the invention, the carriage is supported by the second drive means and is spaced above the second conveyor means when in the discharge position.

In a specific embodiment according to the apparatus of the invention, drive means are connected to the pusher means and movable in a direction normal to the side edge of the first conveyor means.

In another specific embodiment according to the invention, the guide surface extends at an angle of about 1° to 5° with respect to the side edge of the first conveyor means.

The method according to the invention is characterized in that the method as defined above further comprises the following steps: Transferring the stack laterally onto a second moving conveyor while preventing a movement of the stack in the direction of movement of the second conveyor, including feeding the stack into a carriage that is offset laterally from the second conveyor, moving the carriage laterally to a position over the second conveyor and retaining the stack within the carriage, and thereafter releasing the stack from the carriage to permit the stack to move on the second conveyor.

A specific embodiment of the method according to the invention includes the step of successively tilting each article in a horizontal plane to a position at an acute angle with respect to the side edge of the first conveyor as each article reaches a predetermined position on the first conveyor and before pushing the article laterally from the first conveyor.

The invention will be described in detail below in connection with a specific embodiment and with reference to the accompanying drawings, wherein
- Fig. 1: is a top plan view of the apparatus according to the invention;
- Fig. 2: is an end view of the apparatus;
- Fig. 3: is a side elevation of the apparatus;
- Fig. 4: is a section taken along line 4-4 of Fig. 1;
- Fig. 5: is an enlarged fragmentary horizontal section showing the guide strip on a first conveyor of the apparatus; and Fig. 6 is a section taken along line 6-6 of Fig. 5.

### Description of the Illustrated Embodiment

The drawings illustrate an apparatus for stacking a plurality of small articles in side-by-side relation and transferring the stack onto a moving discharge conveyor. In general, the apparatus consists of a generally rectangular frame 1 and a plurality of articles 2 are conveyed into the frame on an in-feed or first conveyor 3. The articles 2, as illustrated, are generally flat containers, such as video cassette containers, which are conveyed edgewise in end-to-end relation on the first conveyor 3.

The articles 2 on the first conveyor 3 are stacked in side-by-side relation by a stacking unit 4 and the stack is then transferred to a transfer unit 5, which acts to move the stack onto a second conveyor 6. In practice, there may be a series of stacking and transfer units 4 and 5, acting to stack articles 2 and transfer the stacks onto the second conveyor 6.

The frame 1 includes a plurality of uprights or legs 7 which are located at the corners of the frame and the legs are connected by a series of horizontal beams 8. Two of the vertical legs 7 project upwardly above the stacking and transfer units 4 and 5 and carry a pair of upper horizontal beams 9 which are spaced above beams 8.

The first conveyor 3 includes a frame 10 and a belt 11 is mounted for endless travel on the frame 10. The belt 11 is trained over an idler pulley 12 and a drive pulley, not shown, which is driven in a conventional manner to drive the belt 11 in its endless path.

To prevent tilting of the articles 2 as they are conveyed on the first conveyor 3, a pair of guide rails 13 extend upwardly from either side of the frame 10 and define a guideway within which the articles 2 travel. The articles 2 can be in end-to-end spaced relation on the first conveyor 3 or may be in end-to-end contacting relation.

A horizontal supporting surface or platform 14 is mounted through a subframe 15 above the beams 8 of frame 1 and a supporting surface 14 is located slightly beneath the level of the upper surface of the belt 11.

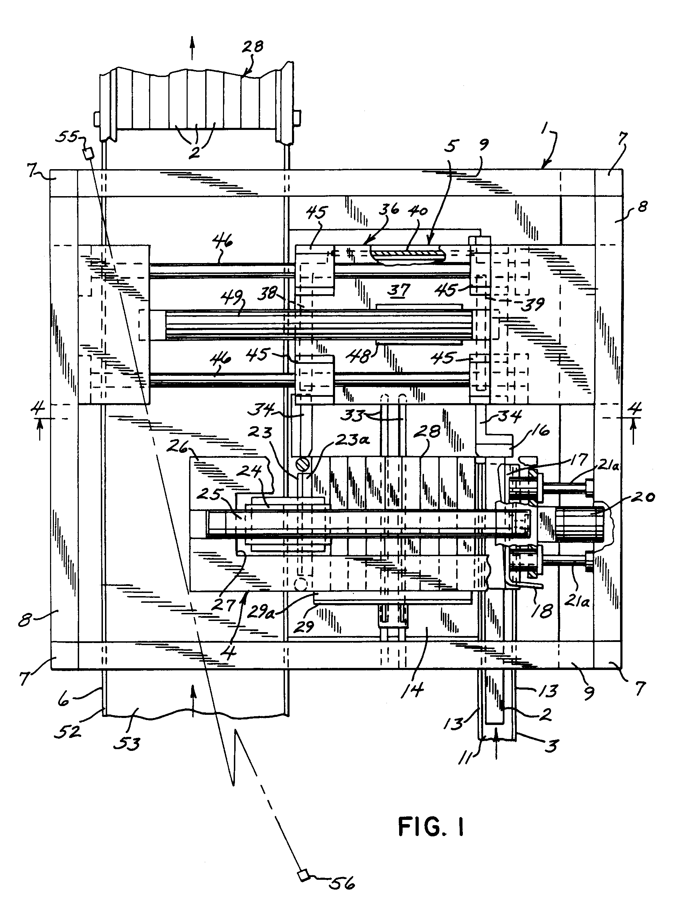

A stop 16, as shown in Fig. 1, is positioned above the downstream end of the first conveyor 3 and as each article 2 moves along the first conveyor 3 it engages stop 16 to thereby stop its movement on the moving conveyor. With each article 2 stopped, it is then transferred laterally by operation of a pusher plate 17, which is normally positioned above one of the side edges of the conveyor belt 11.

As best illustrated in Fig. 1, the upstream edge 18 of the pusher plate 17 extends at a slight angle to a plane normal to the direction of movement of the first conveyor 3. When the pusher plate 17 moves across the first conveyor 3 to transfer the article 2 to the supporting surface 14, the flange or edge 18 will stop movement of the next succeeding article 2 on the moving first conveyor 3 and thus eliminates the need for holding the next article 2 back on the first conveyor 3 during the transfer of the preceding article to the platform 14.

To move the pusher plate 17 in its reciprocating travel, a piston 19 slidable in a cylinder 20 is connected to the rear surface of the pusher plate 17. The cylinder 20 is mounted on a vertical plate 21 that extends upwardly from the platform 14. Guide rods 21a are mounted on the rear surface of the pusher plate 17 and slide within bushings on the plate 21 to guide the pusher plate 17 in movement.

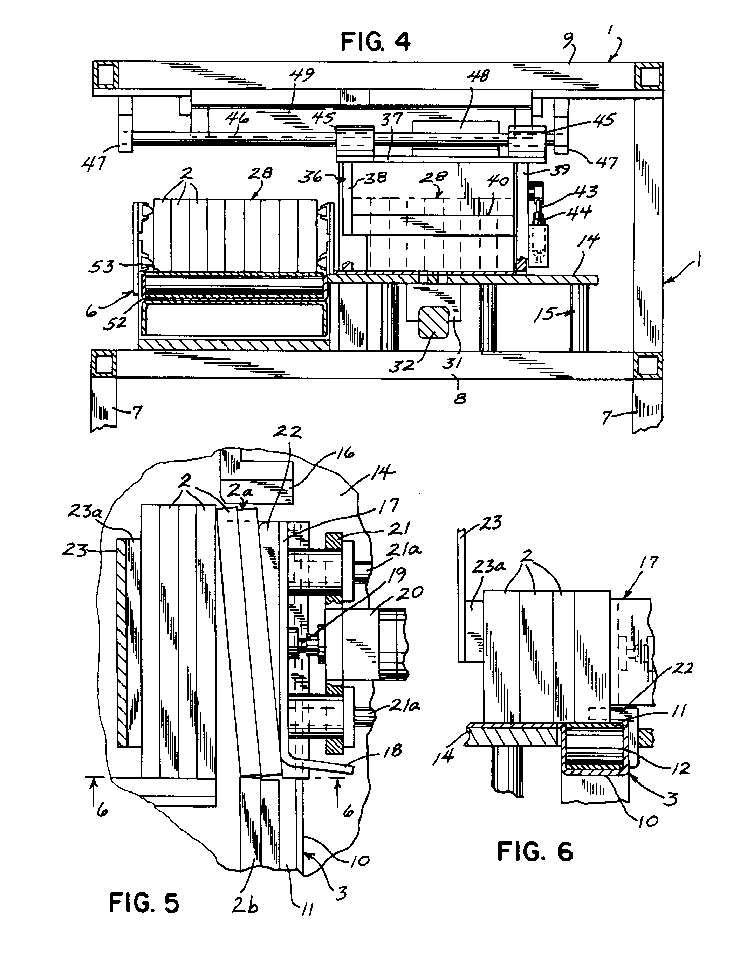

When the conveying system is employed to convey video cassette containers which are composed of two interlocking halves, it has been found in some instances that the halves are not perfectly aligned so that the leading and trailing edges of the containers may have misaligned edges, as illustrated by the containers 2a and 2b in Fig. 5. If the containers are in contacting end-to-end relation on conveyor 3, the misaligned edges may catch as the container or article 2 is pushed onto the platform 14. To eliminate this problem, a guide 22 is positioned along a side edge of the conveyor belt 11. As shown in Fig. 6, the guide 22 is located slightly above the belt 11 and beneath the pusher plate 17. The guide 22 extends at a slight angle of about 1° to 5° with respect to the side edge of the belt 11, and as the container 2a moves on the conveyor belt 11, it will be deflected, as shown in Fig. 5, toward the center line of the conveyor by guide 22, thus pivoting the trailing end of the container 2a away from the leading end of the following container 2b and preventing the possibility of the offset half of container 2a catching on the offset half of container 2b.

As the pusher plate 17 moves forwardly to engage the canted article 2, the article will pivot into a flatwise condition with the pusher plate 17 and move onto the platform 14. This pivoting action of each article 2 produced by the guide 22 eliminates the possibility of misaligned edges on the trailing end of a preceding article 2a catching on the leading end of a succeeding article 2b as the preceding article 2a is pushed onto the platform 14.

As the article 2 is pushed onto the platform 14 it engages a movable backstop 23. The backstop 23 comprises a generally vertical plate that is supported from the carriage 24 of a rodless cylinder 25. The surface of the backstop 23 can be covered with a plastic sheet, or other material having a low coefficient of friction, as indicated by 23a.

The cylinder 25 is mounted on a horizontal plate 26 that is spaced above the platform 14 and supported by the vertical plate 21 and the upper beams 9. As shown in Fig. 1, the plate 26 is provided with an elongated slot 27 which receives the movable carriage 24 of the cylinder 25.

At the start of the stacking operation, the backstop 23 is located adjacent the first conveyor 3, and as the first article 2 of the stack is pushed from the the first conveyor 3 by the pusher plate 17 it will engage the backstop 23 and move the backstop 23 away from the first conveyor 3. Each succeeding article will then be pushed by the plate 17 against the preceding article to move the backstop 23 in increments in a direction away from the first conveyor 3 to form a stack 28. During the stacking operation, the cylinder 25 is not pressurized, so that the backstop 23 and the carriage 24 can freely move with only the friction of the piston of the cylinder 25 resisting the movement.

When the desired number of articles 2 have been stacked the backstop 23 will be at the far end of the platform 14 and the resulting stack 28 of articles 2 is then pushed across the platform 14 to the transfer unit 5 by a pusher plate 29. A strip of nylon 29a or other material having a low coefficient of friction, can be attached to the surface of the pusher plate 29. The pusher plate 29 is mounted for movement slightly above the level of the platform 14, and a pair of depending arms 30 connect the pusher plate 29 to a carriage 31 of a rodless cylinder 32 that is mounted beneath the platform 14. The platform 14 is formed with a pair of parallel slots 33 which receive the arms 30 as seen in Fig. 1.

As the stack 28 is moved across the platform 14 to the transfer unit 5, the ends of the stack 28 are guided by a pair of guides 34 which extend upwardly from the platform 14.

When the stack 28 has been moved to the transfer unit 5, the cylinder 25 is pressurized to move the back stop 23 to its original location adjacent the first conveyor 3, in its position to receive a second stack 28.

The transfer unit 5 includes a movable carriage 36 composed of a horizontal top plate 37 and a pair side plates 38 and 39. The side plate 38 facing the second conveyor 6 has a lesser height than the side plate 39, as shown in Fig. 4.

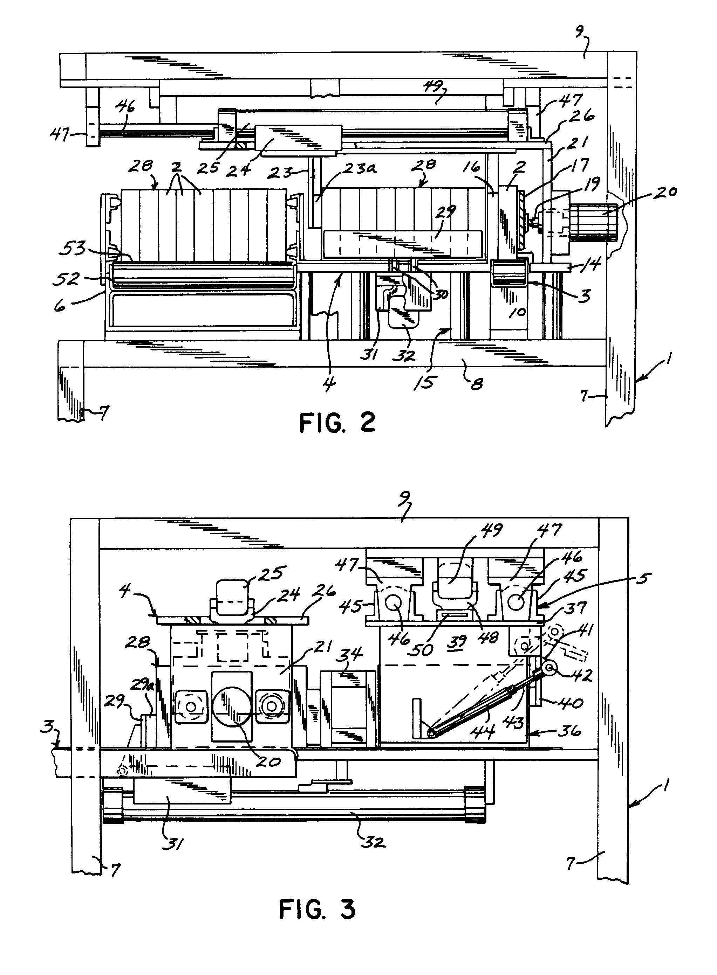

The stack 28 is pushed into the open end of the carriage 36 between the side plates 38 and 39 and the opposite end of the carriage 36 is enclosed by a movable gate 40 that extends between the side plates 38 and 39. As best illustrated in Fig. 3, the gate 40 can be pivoted between a downwardly hanging obstructing position and an inclined non-obstructing position, by a fluid cylinder unit. More particularly, the gate 40 carries a pair of brackets 41 that support a horizontal shaft 42 that extends between the side plates 38 and 39. A piston rod 43 of a pneumatic cylinder 44 is pivotally connected to the gate 40, while the cylinder 44 is pivotally attached through a bracket to the side plate 39. By extending the piston rod 43, the gate 40 can be moved between the downwardly hanging or closed position and the inclined open position.

The gate 40 serves as a stop to prevent the articles 2 of the stack 28 from being individually carried away by the moving second conveyor 6 as the stack 28 is transferred to the second conveyor 6. When the stack 28 is fully located over the second conveyor 6, the gate 40 is elevated to permit the stack 28 to move on the second conveyor 6 and maintain the side-by-side stacked relationship of the articles 2.

The carriage 36 is mounted for movement in a direction transverse to the direction of movement of the first and second conveyors 3 and 6. In this regard, two pairs of bearing blocks 45 are mounted on the top plate 37 and a pair of guide rods 46 are received in corresponding pairs of bearing blocks 45. The guide rods are connected through brackets 47 to the upper beams 9 of the frame 1.

To move the carriage 36 along the guide rods 46, a carriage 48 of a rodless cylinder 49 is connected to a plate 50 that is mounted on the upper surface of the top plate 37. Movement of the carriage 48 relative to the cylinder 49 will thus move the carriage 36 from a receiving position, as shown in Fig. 1 where it receives a stack 28 from the stacking unit 4, to a discharge position, where the carriage 36 is located above the second conveyor 6.

As the carriage 36 is moved to the discharge position, the stack 28 will slide laterally across platform 14 onto the moving belt of the second conveyor 6. The gate 40 is then moved to the open position through the operation of the cylinder 43, and the stack 28 will then be conveyed away on the second conveyor 6.

The second conveyor 6 is of conventional construction and includes a frame 52 which supports a belt 53 for endless travel. The upper surface of the belt 53 is located slightly beneath the upper surface of the platform 14.

A sensing system is utilized to insure that the stack 28 being transferred to the second conveyor 6 will not interfere with another stack 28 moving on the second conveyor 6. To provide this function, a pair of sensors 55 and 56, such as photoelectric sensors, are located diagonally along opposite sides of the second conveyor 6, as seen in Fig. 1. The operation of the carriage 36 is controlled by the sensors 55, 56. If the beam between the sensors 55 and 56 is unbroken, indicating that there is no stack 28 along the length of the beam, the carriage 36 will be operated to move the stack 28 onto the second conveyor 6. On the other hand, if the beam between the sensors 55 and 56 is broken, indicating the presence of a stack 28 at that location, the carriage 36 will not operate to move the stack 28 onto the second conveyor 6.

The invention provides a compact unit for precisely stacking articles 2 in a side-by-side relation and transferring the stack 28 onto a moving conveyor. The apparatus has particular application for thin articles that are adapted to be stacked in side-by-side relation and the movement of the individual articles in the stack is controlled, so that tipping or misalignment of the articles is prevented.

The sensing mechanism which controls the operation of the carriage 36 insures that the stack 28 being transferred onto the discharge conveyor 6 will not interfere with other stacks 28 moving along the conveyor 6.

## Claims

1. A stacking apparatus, comprising
- first conveyor means (3) to convey a plurality of articles (2) edgewise in end-to-end relation,
- transfer means (4) for successively moving each article (2) laterally from the first conveyor means (3) to form a stack (28) of side-by-side articles,
- a carriage (36) movable between a stack receiving position and a stack discharge position, the carriage having a first open end and a second end, and
- first drive means (29) for moving the stack (28) through the first open end into the carriage (36),
characterized in that
- the apparatus comprises a movable backstop (23) against which the stack (28) is formed,
- the carriage (36) is movable between a stack receiving position offset from a second conveyor means (6) to a stack discharge position located above the second conveyor means (6), and further comprises
- gate means (40) for enclosing the second end, facing downstream in the direction of movement of the second conveyor means, and movable between a closed position and an open position,
- second drive means (45-50) for moving the carriage (36) from the receiving position to the discharge position, and
- means (43, 44) for moving the gate means (40) from the closed position to the open position when the carriage (36) is in the discharge position to release the stack (28) for movement on the second conveyor means (6).

2. The apparatus of claim 1,
wherein the transfer means (4) for moving each article (2) to form a stack (28) comprises pusher means (17-22) disposed to move laterally across the first conveyor means (3), a generally flat platform (14) disposed at substantially the same level as the first conveyor means (3) to receive the articles (2) as they are pushed from the first conveyor means (3), and backstop means (23-27) mounted for movement in a direction laterally of the first conveyor means (3) for supporting the stack (28) on the platform (14).

3. The apparatus of claim 2,
wherein the pusher means (17-22) comprises a generally flat vertical pusher plate (17), and guide means (22) disposed above the first conveyor means (3) and offset from the path of travel of the pusher means (17-22), the guide means (22) having a guide surface disposed at an acute angle to the side edge of the first conveyor means (3), the guide surface being constructed and arranged to pivot each article (2a) in a horizontal plane as the article (2a) approaches stop means (16) to prevent the trailing edge of each article (2a) from catching on the leading edge of a succeeding article (2b) as the preceeding (2a) is pushed laterally from the first conveyor means (3).

4. The apparatus of claim 2 or 3,
wherein the backstop means (23-27) comprises a stop member (23, 23a), a fluid cylinder (25) including a reciprocating member (24), the stop member (23, 23a) being connected to the reciprocating member (24), the fluid cylinder (25) being constructed and arranged so that the reciprocating member (24) is freely movable in a direction away from the first conveyor means (3), and the reciprocating member (24) is power operated in a direction towards the first conveyor means (3).

5. The apparatus of claim 4,
wherein the fluid cylinder (25) comprises a rodless cylinder and the reciprocating member (24) comprises carriage means mounted for movement on the rodless cylinder (25).

6. The apparatus of any of claims 1 to 5,
including guide means (34) for guiding the stack (28) in movement to the carriage (36).

7. The apparatus of any of claims 1 to 6,
including means (42, 43, 44) for pivotally connecting the gate means (40) to the carriage (36) for movement between the closed and open positions.

8. The apparatus of any of claims 1 to 7,
wherein the carriage (36) is supported by the second drive means (45-50) and is spaced above the second conveyor means (6) when in the discharge position.

9. The apparatus of any of claims 2 to 8,
including drive means (20) connected to the pusher means (17-22) and movable in a direction normal to the side edge of the first conveyor means (3).

10. The apparatus of any of claims 3 to 9,
wherein the guide surface (22) extends at an angle of about 1° to 5° with respect to the side edge of the first conveyor means (3).

11. A method for stacking articles (2) and feeding the stack (28) to a discharge conveyor (6) including the steps of
- conveying a plurality of articles (2) in end-to-end relation on a first conveyor (3) and
- successively pushing each article (2) laterally from the conveyor (3) into bearing engagement with a movable backstop to form a stack (28) of side-by-side articles,
characterized in that the method further comprises the following steps:
- transferring the stack (28) laterally onto a second moving conveyor (6) while preventing a movement of the stack (28) in the direction of movement of the second conveyor (6), including
- feeding the stack (28) into a carriage (36) that is offset laterally from the second conveyor (6),
- moving the carriage (36) laterally to a position over the second conveyor (6) and retaining the stack (28) within the carriage (36), and thereafter
- releasing the stack (28) from the carriage (36) to permit the stack (28) to move on the second conveyor (6).

12. The method of claim 11,
including the step of successively tilting each article (2a) in a horizontal plane to a position at an acute angle with respect to the side edge of the first conveyor (3) as each article (2a) reaches a predetermined position on the first conveyor (3) and before pushing the article (2a) laterally from the first conveyor (3).

## Patentansprüche

1. Stapelvorrichtung, die folgendes aufweist:
- eine erste Fördereinrichtung (3), um eine Vielzahl von Gegenständen (2) hochkant in einer Ende-an-Ende Beziehung zu fördern,
- eine Überführungseinrichtung (4), um nacheinander jeden Gegenstand (2) quer von der ersten Fördereinrichtung (3) weg zu bewegen, um einen Stapel (28) von nebeneinander angeordneten Gegenständen zu bilden,
- einen Schlitten (36), der zwischen einer Stapelaufnahmeposition und einer Stapelabgabeposition bewegbar ist, wobei der Schlitten ein erstes offenes Ende und ein zweites Ende hat, und
- eine erste Antriebseinrichtung (29), um den Stapel (28) durch das erste offene Ende in den Schlitten (36) zu bewegen,
dadurch gekennzeichnet, daß
- die Vorrichtung einen beweglichen Gegenhalter (23) aufweist, gegen den der Stapel (28) aufgebaut wird,
- der Schlitten (36) zwischen einer Stapelaufnahmeposition, die gegenüber einer zweiten Fördereinrichtung (6) versetzt ist, und einer Stapelabgabeposition, die über der zweiten Fördereinrichtung (6) liegt, bewegbar ist, und ferner folgendes aufweist:
- eine Sperreinrichtung (40) zum Einfassen des zweiten Endes, die der stromabwärtigen Seite in der Bewegungsrichtung der zweiten Fördereinrichtung zugewandt und zwischen einer Schließposition und einer Offenposition bewegbar ist,
- eine zweite Antriebseinrichtung (45-50), um den Schlitten (36) aus der Aufnahmeposition in die Abgabeposition zu bewegen, und
- eine Einrichtung (43, 44), um die Sperreinrichtung (40) aus der Schließposition in die Offenposition zu bewegen, wenn der Schlitten (36) in der Abgabeposition ist, um den Stapel (28) zur Bewegung auf die zweite Fördereinrichtung (6) freizugeben.

2. Vorrichtung nach Anspruch 1,
wobei die Überführungseinrichtung (4) zum Bewegen jedes Gegenstands (2), um einen Stapel (28) zu bilden, folgendes aufweist: eine Schiebeeinrichtung (17-22), die angeordnet ist, um sich quer über die erste Fördereinrichtung (3) zu bewegen, eine im allgemeinen flache Plattform (14), die im wesentlichen auf der gleichen Höhe wie die erste Fördereinrichtung (3) angeordnet ist, um die Gegenstände (2) aufzunehmen, wenn sie von der ersten Fördereinrichtung (3) heruntergeschoben werden, und eine Gegenhaltereinrichtung (23-27), die zur Bewegung in einer Richtung quer zu der ersten Fördereinrichtung (3) angeordnet ist, um den Stapel (28) auf der Plattform (14) abzustützen.

3. Vorrichtung nach Anspruch 2,
wobei die Schiebeeinrichtung folgendes (17-22) aufweist: eine im allgemeinen flache vertikale Schiebeplatte (17) und eine Führungseinrichtung (22), die über der ersten Fördereinrichtung (3) angeordnet und gegenüber der Bewegungsbahn der Schiebeeinrichtung (17-22) versetzt ist, wobei die Führungseinrichtung (22) eine Führungsfläche hat, die unter einem spitzen Winkel zu dem Seitenrand der ersten Fördereinrichtung (3) angeordnet ist, und wobei die Führungsfläche ausgebildet und angeordnet ist, um jeden Gegenstand (2a) in einer Horizontalebene zu schwenken, während sich der Gegenstand (2a) einer Anschlageinrichtung (16) nähert, um zu verhindern, daß die Hinterkante jedes Gegenstands (2a) an der Vorderkante eines nachfolgenden Gegenstands (2b) hängenbleibt, während der vorhergehende Gegenstand (2a) quer von der ersten Fördereinrichtung (3) heruntergeschoben wird.

4. Vorrichtung nach Anspruch 2 oder 3,
wobei die Gegenhaltereinrichtung (23-27) folgendes aufweist: ein Anschlagelement (23, 23a), einen Fluidzylinder (25), der ein hin- und hergehendes Element (24) hat, wobei das Anschlagelement (23, 23a) mit dem hin- und hergehenden Element (24) verbunden ist, der Fluidzylinder (25) so ausgebildet und angeordnet ist, daß das hin- und hergehende Element (24) in einer Richtung weg von der ersten Fördereinrichtung (3) frei bewegbar ist, und das hin- und hergehende Element (24) in einer Richtung zu der ersten Fördereinrichtung (3) motorbetätigt ist.

5. Vorrichtung nach Anspruch 4,
wobei der Fluidzylinder (25) einen stangenlosen Zylinder aufweist und das hin- und hergehende Element (24) eine Schlitteneinrichtung aufweist, die zur Bewegung auf dem stangenlosen Zylinder (25) angebracht ist.

6. Vorrichtung nach einem der Ansprüche 1 bis 5,
die eine Führungseinrichtung (34) aufweist, um den Stapel (28) bei der Bewegung zu dem Schlitten (36) zu führen.

7. Vorrichtung nach einem der Ansprüche 1 bis 6,
die eine Einrichtung (42, 43, 44) aufweist, um die Sperreinrichtung (40) mit dem Schlitten (36) zur Bewegung zwischen der Schließ- und der Offenposition gelenkig zu verbinden.

8. Vorrichtung nach einem der Ansprüche 1 bis 7,
wobei der Schlitten (36) von der zweiten Antriebseinrichtung (45-50) abgestützt und über der zweiten Fördereinrichtung (6) beabstandet ist, wenn er in der Abgabeposition ist.

9. Vorrichtung nach einem der Ansprüche 2 bis 8, die eine Antriebseinrichtung (20) aufweist, die mit der Schiebeeinrichtung (17-22) verbunden und in einer Richtung senkrecht zu dem Seitenrand der ersten Fördereinrichtung (3) bewegbar ist.

10. Vorrichtung nach einem der Ansprüche 3 bis 9, wobei die Führungsfläche (22) in bezug auf den Seitenrand der ersten Fördereinrichtung (3) unter einem Winkel von ca. 1° bis 5° verläuft.

11. Verfahren zum Stapeln von Gegenständen (2) und Zuführen des Stapels (28) zu einem Abgabeförderer (6), das die folgenden Schritte aufweist:
- Fördern einer Vielzahl von Gegenständen (2) in einer Ende-an-Ende Beziehung auf einem ersten Förderer (3) und
- aufeinanderfolgendes Schieben jedes Gegenstands (2) quer von dem Förderer (3) herunter in Abstützanlage gegen einen beweglichen Gegenhalter, um einen Stapel (28) von nebeneinander angeordneten Gegenständen zu bilden,
dadurch gekennzeichnet, daß das Verfahren ferner die folgenden Schritte aufweist:
- Überführen des Stapels (28) in Querrichtung auf einen zweiten bewegten Förderer (6), während gleichzeitig eine Bewegung des Stapels (28) in der Bewegungsrichtung des zweiten Förderers (6) verhindert wird, einschließlich
- Zuführen des Stapels (28) in einen Schlitten (36), der gegenüber dem zweiten Förderer (6) in Querrichtung versetzt ist,
- Bewegen des Schlittens (36) in Querrichtung in eine Position über dem zweiten Förderer (6) und Festhalten des Stapels (28) in dem Schlitten (36) und anschließend
- Freigeben des Stapels (28) von dem Schlitten (36), um zuzulassen, daß sich der Stapel (28) auf dem zweiten Förderer (6) bewegt.

12. Verfahren nach Anspruch 11,
das den folgenden Schritt aufweist: aufeinanderfolgendes Neigen jedes Gegenstands (2a) in einer Horizontalebene in eine Position unter einem spitzen Winkel in bezug auf den Seitenrand des ersten Förderers (3), wenn jeder Gegenstand (2a) eine vorbestimmte Position auf dem ersten Förderer (3) erreicht und bevor der Gegenstand (2a) in Querrichtung von dem ersten Förderer (3) heruntergeschoben wird.

## Revendications

1. Appareil d'empilage comprenant :
- un premier transporteur (3) pour transporter une multiplicité d'articles (2) disposés sur chant et bout à bout,
- des moyens de transfert (4) pour déplacer successivement chaque article (2) latéralement depuis le premier transporteur (3) pour former une pile (28) d'articles disposés côte à côte,
- un chariot (36) pouvant se déplacer entre une position de réception des piles et une position de décharge des piles, le chariot ayant une première extrémité ouverte et une deuxième extrémité, et
- des premiers moyens d'entraînement (29) pour déplacer la pile (28) à travers la première extrémité ouverte dans le chariot (36),
caractérisé en ce que :
- le dispositif comprend une butée d'appui mobile (23) contre laquelle est formée la pile (28),
- le chariot (36) peut se déplacer entre une position de réception des piles décalée par rapport à un deuxième transporteur (6) jusqu'à une position de décharge des piles située au-dessus du deuxième transporteur (6), et en outre
- des moyens de porte (40) ferment la deuxième extrémité, regardant vers l'aval dans la direction de déplacement du deuxième transporteur, et peuvent être déplacés entre une position fermée et une position ouverte,
- des deuxièmes moyens d'entraînement (45-50) déplacent le chariot (36) de la position de réception à la position de décharge, et
- des moyens (43,44) déplacent les moyens de porte (40) de la position fermée à la position ouverte lorsque le chariot (36) est dans la position de décharge pour libérer la pile (28) pour qu'elle se déplace sur le deuxième transporteur (6).

2. Dispositif selon la revendication 1, dans lequel les moyens de transfert (4) pour déplacer chaque article (2) pour former une pile (28) comportent des moyens de poussoir (17-22) disposés pour se déplacer latéralement en travers du premier transporteur (3), une plate-forme généralement plane (14) disposée pratiquement au même niveau que le premier transporteur (3) pour recevoir les articles (2) lorsqu'ils sont poussés depuis le premier transporteur (3), et des moyens de butée d'appui (23-27) montés pour se déplacer latéralement par rapport au premier transporteur (3) pour supporter la pile (28) sur la plate-forme (14).

3. Dispositif selon la revendication 2, dans lequel les moyens de poussoir (17-22) comprennent une plaque poussoir verticale généralement plane (17) et des moyens de guidage (22) disposés au-dessus du premier transporteur (3) et décalés par rapport au trajet des moyens de poussoir (17-22), les moyens de guidage (22) ayant une surface de guidage disposée en faisant un angle aigu par rapport au bord latéral du premier transporteur (3), la surface de guidage étant réalisée et agencée pour faire pivoter chaque article (2a) dans un plan horizontal lorsque cet article (2a) s'approche des moyens de butée (16) pour empêcher le bord arrière de chaque article (2a) de s'accrocher sur le bord avant d'un article suivant (2b) lorsque l'article précédent (2a) est poussé latéralement du premier transporteur (3).

4. Dispositif selon la revendication 2 ou la revendication 3, dans lequel les moyens de butée d'appui (23-27) comprennent un élément de butée (23,23a), un vérin fluidique (25) comprenant un élément alternatif (24), l'élément de butée (23,23a) étant raccordé à l'élément alternatif (24), le vérin fluidique (25) étant réalisé et agencé de telle sorte que l'élément alternatif (24) peut se déplacer librement dans une direction l'éloignant du premier transporteur (3) et que cet élément alternatif (24) est déplacé par une source d'énergie en direction du premier transporteur (3).

5. Dispositif selon la revendication 4, dans lequel le vérin fluidique (25) est un vérin sans tige et dans lequel l'élément alternatif (24) comporte des moyens de chariot montés pour se déplacer sur le vérin sans tige (25).

6. Dispositif selon l'une des revendications 1 à 5, comportant des moyens de guidage (34) pour guider la pile (28) en mouvement dans le chariot (36).

7. Dispositif selon l'une des revendications 1 à 6, comportant des moyens (42,43,44) pour relier à pivotement les moyens de porte (40) au chariot (36) pour déplacer les moyens de porte entre la position fermée et la position ouverte.

8. Dispositif selon l'une des revendications 1 à 7, dans lequel le chariot (36) est supporté par les deuxièmes moyens d'entraînement (45-50) et est espacé au-dessus du deuxième transporteur (6) lorsqu'il est dans la position de décharge.

9. Dispositif selon l'une des revendications 2 à 8, comportant des moyens d'entraînement (20) raccordés aux moyens de poussoir (17-22) et mobiles dans une direction perpendiculaire au bord latéral du premier transporteur (3).

10. Dispositif selon l'une des revendications 3 à 9, dans lequel la surface de guidage (22) s'étend en faisant un angle d'environ 1 à 5° par rapport au bord latéral du premier transporteur (3).

11. Procédé pour empiler des articles (2) et amener la pile (28) à un transporteur de décharge (6), comportant les stades suivants :
- transporter une multiplicité d'articles (2) disposés bout à bout sur un premier transporteur (3); et
- pousser successivement chaque article (2) latéralement hors du transporteur (3) pour s'appliquer contre une butée d'appui mobile pour former une pile (28) d'articles disposés côte à côte;
caractérisé en ce que ce procédé comprend en outre les stades suivants :
- transférer la pile (28) latéralement sur un deuxième transporteur mobile (6) tout en empêchant la pile (28) de se déplacer dans la direction de déplacement du deuxième transporteur (6);
- amener la pile (28) sur un chariot (36) qui est décalé latéralement du deuxième transporteur (6);
- déplacer le chariot (36) latéralement jusqu'à une position au-dessus du deuxième transporteur (6) et retenir la pile (28) à l'intérieur du chariot (36), et ensuite
- libérer la pile (28) du chariot (36) pour permettre à la pile (28) de se déplacer sur le deuxième transporteur (6).

12. Dispositif selon la revendication 11, comportant le stade dans lequel on fait pivoter successivement chaque article (2a) dans un plan horizontal jusqu'à une position faisant un angle aigu par rapport au bord latéral du premier transporteur (3) lorsque chaque article (2a) atteint une position prédéterminée sur le premier transporteur (3) et avant de pousser l'article (2a) latéralement hors du premier transporteur (3).
